# EUROPEAN PATENT APPLICATION

(11) **EP 2 957 615 A1**
(43) Date of publication of application: **23.12.2015**
(21) Application number: 14751995.3
(22) Date of filing: 10.02.2014
(51) Int. Cl.: C09K 3/18, C03C 17/30, C03C 17/42, C09D 5/00, C09D 183/08

(54) **COMPOSITION FOR FORMING WATER-REPELLENT FILMS, AND USE OF SAME**

(30) Priority: 15.02.2013 JP 2013028135
(71) Applicant: Asahi Glass Company, Limited, Tokyo 100-8405 (JP)
(72) Inventor: TAKEDA, Yosuke, Tokyo 100-8405 (JP); HOSHINO, Taiki, Tokyo 100-8405 (JP); ISHIZEKI, Kenji, Tokyo 100-8405 (JP)
(74) Representative: Müller-Boré & Partner Patentanwälte PartG mbB
(86) International application number: PCT/JP2014/053091
(87) International publication number: WO 2014/126064

(57) **Abstract**

To provide a composition for forming a water repellent film capable of forming a water repellent film excellent in chemical resistance and light resistance; a water repellent film formed by using such a composition for forming a water repellent film; a substrate with a water repellent film having such a water repellent film formed on at least a part of a substrate; and an article for a transport equipment comprising such a substrate with a water repellent film.

A composition for forming a water repellent film, which comprises (A) a compound of the formula (1) and/or its partially hydrolyzed condensate, and (B) a compound of the formula (2) having a number average molecular weight of at least 2,600 and/or its partially hydrolyzed condensate, or a partially hydrolyzed co-condensate of the component (A) and the component (B); a water repellent film formed by using such a composition for forming a water repellent film; a substrate with a water repellent film having such a water repellent film formed on at least a part of a substrate; and an article for a transport equipment comprising such a substrate with a water repellent film.

## Description

### TECHNICAL FIELD

The present invention relates to a composition for forming a water repellent film, a water repellent film formed by using such a composition for forming a water repellent film, a substrate with a water repellent film having such a water repellent film formed on at least a part of a substrate, and an article for a transport equipment comprising such a substrate with a water repellent film.

### BACKGROUND ART

Heretofore, in various technical fields, it has been desired to impart water repellency to the surface of a substrate. As a method for imparting water repellency, it has been common to form a water repellent coating film on the surface of a substrate, and technical developments have been made with respect to a composition to form such a coating film. Especially in a case where the substrate is a substrate for an article for a transport equipment, such as glass for automobiles, in addition to impart water repellency to the coating film, the composition is strongly desired to impart durability such as abrasion resistance and weather resistance. As a composition capable of forming a water repellent film excellent in durability, a composition has been proposed wherein a hydrolyzable silane compound having a fluorinated polyether group and a hydrolyzable silane compound having a fluorinated alkyl group are combined (see Patent Document 1).

### PRIOR ART DOCUMENT

### PATENT DOCUMENT

Patent Document 1: WO2011/016458

### DISCLOSURE OF INVENTION

### TECHNICAL PROBLEM

By a research conducted by the present inventors, it has been found that a water repellent film to be formed by the composition specifically disclosed in Patent Document 1, while it is one excellent in water repellency and abrasion resistance, still has room for improvements from the viewpoint of chemical resistance (alkali reagent resistance and salt spray resistance) and light resistance. Especially when as a hydrolyzable silane compound having a fluorinated alkyl group, one having a fluorinated alkyl group with a short chain length (e.g. a perfluoroalkyl group having at most 6 carbon atoms) is used, it has been found difficult to obtain good chemical resistance.

The present invention has been made from the above viewpoint and has an object to provide a composition for forming a water repellent film capable of forming a water repellent film excellent in chemical resistance and light resistance. Further, the present invention has an object to provide a water repellent film formed by using such a composition for forming a water repellent film, a substrate with a water repellent film having such a water repellent film formed on at least a part of a substrate, and an article for a transport equipment comprising such a substrate with a water repellent film.

### SOLUTION TO PROBLEM

The present invention provides the following.
[1] A composition for forming a water repellent film, which comprises
   (A) a compound represented by the formula (1): R^{f1}-Q¹-SiR¹ₚX¹₃₋ₚ (wherein R^{f1} is a group: C_{I}F_{2I+1} (wherein I is an integer of from 1 to 6), Q¹ is a C₁₋₆ bivalent hydrocarbon group, R¹ each independently is a C₁₋₆ monovalent hydrocarbon group, X¹ each independently is a hydroxy group or a hydrolyzable group, and p is an integer of from 0 to 2), and/or the compound's partially hydrolyzed condensate, and
   (B) a compound represented by the formula (2): Z¹-R^{f2}-Z² (wherein R^{f2} is -O-(CₐF₂ₐO)ₙ- (wherein a is an integer of from 1 to 6, n is an integer of at least 1, and each -CₐF₂ₐO- unit may be the same or different), and each of Z¹ and Z² which are independent of each other, is R^{f3} or a group: -Q²-{CH₂CH(SiR²_{q}X²_{3-q})}ᵣ-H, provided that either one is the group: -Q²-{CH₂CH(SiR²_{q}X²_{3-q})}ᵣ-H (wherein R^{f3} is a group: CₘF₂ₘ₊₁ (wherein m is an integer of from 1 to 6), Q² is -(CH₂)ₛ- (wherein s is an integer of from 0 to 12) or -(CH₂)ₛ- containing at least one member selected from the group consisting of an ester bond, an ether bond, an amido bond, a urethane bond and a phenylene group, provided that any or all of -CH₂- units may be substituted by a -CF₂- unit and/or a -CFCF₃- unit, R² each independently is a hydrogen atom or a C₁₋₆ monovalent hydrocarbon group which may contain a substituent, X² each independently is a hydroxy group or a hydrolyzable group, q is an integer of from 0 to 2, and r is an integer of from 1 to 20), and having a number average molecular weight of at least 2,600, and/or the compound's partially hydrolyzed condensate; or
      a partially hydrolyzed co-condensate of the component (A) and the component (B).
[2] The composition for forming a water repellent film according to said [1], wherein the compound represented by the formula (2) has a number average molecular weight of from 2,800 to 10,000.
[3] The composition for forming a water repellent film according to said [1] or [2], wherein in the formula (2), Z¹ is R^{f3}, and Z² is a group: -Q²-{CH₂CH(SiR²_{q}X²_{3-q})}ᵣ-H (wherein R^{f3}, Q², R², X², q and r are as defined in said [1]).
[4] The composition for forming a water repellent film according to any one of said [1] to [3], wherein R^{f2} in the formula (2) is a group represented by the formula -O-(CF₂CF₂CF₂CF₂CF₂CF₂O)ₙ₁-(CF₂CF₂CF₂CF₂CF₂O)ₙ₂-(CF₂CF₂CF₂CF₂O)ₙ₃-(CF₂CF₂CF₂O)ₙ₄-(CF₂(CF₃)CF₂O)ₙ₅-(CF₂CF₂O)ₙ₆-(CF₂O)ₙ₇- (wherein each of n1, n2, n3, n4, n5, n6 and n7 which are independent of one another, is an integer of at least 0, provided that the total of n1, n2, n3, n4, n5, n6 and n7 is at least 1, and each repeating unit may be present in a block or random form).
[5] The composition for forming a water repellent film according to said [4], wherein R^{f2} in the formula (2) is a group represented by the formula -O-(CF₂CF₂O-CF₂CF₂CF₂CF₂O)ₙ₈ (wherein n8 is an integer of at least 1).
[6] The composition for forming a water repellent film according to said [5], wherein the compound represented by the formula (2) is a compound represented by the formula (2'): R^{f3'}-O-(CF₂CF₂O-CF₂CF₂CF₂CF₂O)ₙ₈-Q^{2'}-CH₂CH₂SiX^{2'}₃ (wherein R^{f3'} is CF₃ or CF₃CF₂-, Q^{2'} is -CF₂CF₂O-CF₂CF₂CF₂-C(O)NH-CH₂- or -CF₂CF₂O-CF₂CF₂CF₂CH₂-O-CH₂-, X^{2'} each independently is an alkoxy group, a halogen atom or an isocyanate group, and n8 is an integer of at least 1).
[7] The composition for forming a water repellent film according to any one of said [1] to [6], wherein in the composition, the mass ratio of the portion derived from the compound represented by the formula (1) to the portion derived from the compound represented by the formula (2) is from 0.9:0.1 to 0.1:0.9.
[8] A water repellent film formed by using the composition for forming a water repellent film as defined in any one of said [1] to [7].
[9] A substrate with a water repellent film, which comprises a substrate and the water repellent film as defined in said [8], formed on at least a part of the substrate.
[10] The substrate with a water repellent film according to said [9], which further has an undercoat film containing silica, between the substrate and the water repellent film.
[11] The substrate with a water repellent film according to said [10], wherein the undercoat film is one formed by using a composition for forming an undercoat film, which contains a compound represented by the formula (3): SiY₄ (wherein Y each independently is an alkoxy group, a halogen atom or an isocyanate group), or its partially hydrolyzed condensate.
[12] The substrate with a water repellent film according to any one of said [9] to [11], wherein the substrate contains glass.
[13] An article for a transport equipment, which comprises the substrate with a water repellent film as defined in any one of said [9] to [12].

### ADVANTAGEOUS EFFECTS OF INVENTION

According to the present invention, it is possible to provide a composition for forming a water repellent film capable of forming a water repellent film excellent in chemical resistance (alkali reagent resistance and salt spray resistance) and light resistance. Further, according to the present invention, it is possible to provide a water repellent film formed by using such a composition for forming a water repellent film, a substrate with a water repellent film having such a water repellent film formed on at least a part of a substrate, and an article for a transport equipment comprising such a substrate with a water repellent film.

### DESCRIPTION OF EMBODIMENTS

Now, embodiments of the present invention will be described. However, it should be understood that the present invention is by no means restricted by the following description.

In this specification, a compound or group represented by a formula, may be represented as a compound or group having the number of the formula attached. For example, a compound represented by the formula (1) may be represented as a compound (1). In this specification, "the portion derived from the compound (1)" is a generic term used to refer to unreacted compound (1) and units derived from the compound (1) in a partially hydrolyzed condensate of the compound (1) and in a partially hydrolyzed co-condensate of the compound (1) and another hydrolyzable silane compound.

### [Composition for forming water repellent film]

The composition for forming a water repellent film of the present invention contains (A) the compound (1) and/or its partially hydrolyzed condensate (i.e. at least one member selected from the group consisting of the compound (1) and its partially hydrolyzed condensate), or a partially hydrolyzed co-condensate of the component (A) and the component (B). A water repellent film to be formed from the composition of the present invention is capable of maintaining the structure to keep the water repellency, since the chain length of the perfluoroalkylene group in the component (B) is long, so that even if it is exposed to an alkali reagent or salt water, it is possible to prevent penetration of the alkali or salt water to the bonding point of the substrate and the water repellent agent, and even if it is subjected to decomposition by light, it is possible to maintain the structure to keep the water repellency, since the chain length of the perfluoroalkylene group in the component (B) is long. On the other hand, the component (A) is used in combination which contains no ether bond and thus is strong against light, whereby it is capable of efficiently exhibiting weather resistance.

### <(A) compound (1) and/or its partially hydrolyzed condensate>

The compound (1) will be described. The compound (1) is represented by the above formula (1).

R^{f1} in the above formula is a group: C_{I}F_{2I+1} (wherein I is an integer of from 1 to 6), and it may be linear chain or branched chain. Particularly from the viewpoint of weather resistance, it is preferably a linear chain group: CF₃(CF₂)_{I-1} (wherein I is as defined above), more preferably CF₃(CF₂)₃-, CF₃(CF₂)₄- or CF₃(CF₂)₅-, particularly preferably CF₃(CF₂)₅-.

Q¹ in the above formula is a C₁₋₆ bivalent hydrocarbon group, and such a hydrocarbon group may, for example, be a linear or branched alkylene group, an alkylene group having an amido group, or an alkylene group having an ether group. Particularly from the viewpoint of weather resistance, it is preferably a C₁₋₆ linear alkylene group: -(CH₂)ₜ- (wherein t is an integer of from 1 to 6), more preferably -(CH₂)₂-, -(CH₂)₃- or -(-CH₂)₄-, particularly preferably -(CH₂)₂-.

R¹ in the above formula is a C₁₋₆ monovalent hydrocarbon group, and such a hydrocarbon group may, for example, be a linear or branched alkyl group. Particularly from the viewpoint of availability, it is preferably a C₁₋₄ linear or branched alkyl group, more preferably a methyl group or an ethyl group. When a plurality of R¹ are present, they may be the same or different, but from the viewpoint of availability, they are preferably the same.

X¹ in the above formula is a hydroxy group or a hydrolyzable group. Here, the hydrolyzable group is meant for a group capable of forming Si-OH by hydrolysis of Si-X¹, and it may, for example, be an alkoxy group, an acyloxy group, a ketoxime group, an alkenyloxy group, an amino group, an aminoxy group, an amido group, an isocyanate group or a halogen atom. X¹ is preferably a hydroxy group, an alkoxy group (e.g. a C₁₋₄ alkoxy group), an isocyanate group or a halogen atom (e.g. a chlorine atom), more preferably a methoxy group, an ethoxy group or a chlorine atom, particularly preferably a methoxy group. When a plurality of X¹ are present, they may be the same or different, but from the viewpoint of availability, they are preferably the same.

p in the above formula is an integer of from 0 to 2, and from the viewpoint of the adhesion and durability, it is preferably 0 or 1, more preferably 0.

As the compound (1), the following may, for example, be mentioned. Examples and preferred embodiments of I, t, X¹ and R¹ in the formulae are as described above.

Formula (1-1): CF₃(CF₂)_{I-1}-(CH₂)ₜ-SiX¹₃

Formula (1-2): CF₃(CF₂)_{I-1}-(CH₂)ₜ-SiR¹X¹₂

One type of the compound (1) may be used alone, or two or more types may be used in combination. The compound (1) may be produced by a common production method or may be commercially available.

Component (A) may be the compound (1), a partially hydrolyzed condensate of the compound (1), or a mixture thereof. The mixture may be a partially hydrolyzed condensate of the compound (1) containing an unreacted compound (1).

In this specification, a partially hydrolyzed condensate of a hydrolyzable silane compound like the compound (1) is meant for an oligomer to be formed by hydrolysis of all or some of hydrolyzable groups of said compound in a solvent in the presence of a catalyst such as an acid catalyst or an alkali catalyst and water, followed by dehydration condensation. The acid catalyst may, for example, be hydrochloric acid, nitric acid, acetic acid, sulfuric acid, phosphoric acid, sulfonic acid, methanesulfonic acid or p-toluenesulfonic acid. The alkali catalyst may, for example, be sodium hydroxide, potassium hydroxide or ammonia. Here, by using an aqueous solution of such a catalyst, it is possible to let water necessary for hydrolysis be present in the reaction system. The condensation degree (oligomerization degree) of such a partially hydrolyzed condensate is preferably adjusted to such a level that the product is soluble in the solvent.

### <(B) Compound (2) having number average molecular weight of at least 2,600 and/or its partially hydrolyzed condensate>

The compound (2) will be described. The compound (2) is represented by the above formula (2), and it is a compound having a hydroxy group or a hydrolyzable group bonded to silicon, at one terminal or both terminals thereof.

R^{f2} in the above formula is a group: -O-(CaF₂ₐO)ₙ- (wherein a is an integer of from 1 to 6, n is an integer of at least 1, and each -CₐF₂ₐO- unit may be the same or different). Here, the -CₐF₂ₐO- unit may be linear chain or branched chain, and it may, for example, be -CF₂CF₂CF₂CF₂CF₂CF₂O-, -CF₂CF₂CF₂CF₂CF₂O-, -CF₂CF₂CF₂CF₂O-, -CF₂CF₂CF₂O-, -CF(CF₃)CF₂O-, -CF₂CF₂O- or -CF₂O-. n may suitably be adjusted depending upon a desired number average molecular weight. A preferred upper limit value for n is 150.

R^{f2} may be a combination of plural units, and in such a case, each unit may be present in a block or random form. For example, from the viewpoint of improvement in light resistance, it preferably contains -CF₂CF₂CF₂CF₂CF₂CF₂O-, -CF₂CF₂CF₂CF₂CF₂O- or -CF₂CF₂CF₂CF₂O-, and the presence ratio of such a structure should better be large, and from the viewpoint of the efficiency for synthesis, more preferred is -CF₂CF₂O-CF₂CF₂CF₂CF₂O- i.e. a unit having -CF₂CF₂CF₂CF₂O- and -CF₂CF₂O- combined.

R^{f2} may specifically be -O-(CF₂CF₂CF₂CF₂CF₂CF₂O)ₙ₁-(CF₂CF₂CF₂CF₂CF₂O)ₙ₂-(CF₂CF₂CF₂CF₂O)ₙ₃-(CF₂CF₂CF₂O)ₙ₄-(CF(CF₃)CF₂O)ₙ₅-(CF₂CF₂O)ₙ₆-(CF₂O)ₙ₇-(wherein each of n1, n2, n3, n4, n5, n6 and n7 which are independent of one another, is an integer of at least 0, provided that the total of n1, n2, n3, n4, n5, n6 and n7 is at least 1, and each repeating unit may be present in a block or random form), preferably be a group: -O-(CF₂CF₂O-CF₂CF₂CF₂CF₂O)ₙ₈- (wherein n8 is an integer of at least 1).

Z¹ and Z² in the above formula are each independently R^{f3} or a group: -Q²-{CH₂CH(SiR²_{q}X²_{3-q})}ᵣ-H, provided that either one is the group: -Q²-{CH₂CH(SiR²_{q}X²_{3-q})}ᵣ-H. From the viewpoint of good water repellency and appearance of the film, preferably Z¹ is R^{f3} and Z² is the group: -Q²-{CH₂CH(SiR²_{q}X²_{3-q})}ᵣ-H, but both may be the group: -Q²-{CH₂CH(SiR²_{q}X²_{3-q})}ᵣ-H.

R^{f3} is a group: CₘF₂ₘ₊₁ (wherein m is an integer of from 1 to 6), and it may be linear chain or branched chain. Particularly from the viewpoint of availability, it is preferably a linear chain group: CF₃(CF₂)ₘ₋₁ (wherein m is as defined above), more preferably CF₃- or CF₃(CF₂)₂-, particularly preferably CF₃(CF₂)₂-.

In the group: -Q²-{CH₂CH(SiR²_{q}X²_{3-q})}ᵣ-H, Q² is -(CH₂)ₛ- (wherein s is an integer of from 0 to 12), or -(CH₂)ₛ- containing at least one member selected from the group consisting of an ester bond (-C(=O)-O-, -O-C(=O)-), an ether bond (-O-), an amido bond (-C(=O)NH-, -NH-C(=O)-), a urethane bond (-NH-C(=O)-O-, -O-C(=O)-NH-) and a phenylene bond, and any or all of -CH₂- units may be substituted by a -CF₂- unit and/or a -CFCF₃- unit. Q² preferably has a CF₂-C(=O)NH-CH₂ group or a CF₂-CH₂-O-CH₂ group and is more preferably -CF₂CF₂O-CF₂CF₂CF₂-C(=O)NH-CH₂- or -CF₂CF₂O-CF₂CF₂CF₂CH₂-O-CH₂-.

R² is a hydrogen atom or a C₁₋₆ monovalent hydrocarbon group, and such a hydrocarbon group may have a substituent. The hydrocarbon group may be a linear or branched alkyl group. Particularly from the viewpoint of availability, it is preferably a C₁₋₄ linear or branched alkyl group, more preferably a methyl group or an ethyl group. The substituent may be a halogen atom (e.g. a chlorine atom). When a plurality of R² are present, they may be the same or different, but from the viewpoint of availability, they are preferably the same.

X² is a hydroxy group or a hydrolyzable group, and as the hydrolyzable group, the above-mentioned examples and preferred embodiments of the hydrolysable group in X¹ are applicable. When a plurality of X² are present, they may be the same or different, but from the viewpoint of availability, they are preferably the same.

q is an integer of from 0 to 2, and from the viewpoint of adhesion and durability, it is preferably 0 or 1, more preferably 0.

r in the above formula is an integer of from 1 to 20, preferably an integer of from 1 to 5, and it may, for example, be 1.

The number average molecular weight of the compound (2) is at least 2,600, and from the viewpoint of improvement in chemical resistance, it is preferably from 2,800 to 100,000, more preferably from 2,800 to 10,000. Here, the number average molecular weight is calculated by obtaining the number (average value) of oxyperfluoroalkylene units based on terminal groups, by using a NMR analysis.

The compound (2) may, for example, be the following.

A compound of the formula (2'): R^{f3'}-O-(CF₂CF₂O-CF₂CF₂CF₂CF₂O)ₙ₈-Q^{2'}-CH₂CH₂SiX^{2'}₃ (wherein R^{f3'} is CF₃- or CF₃CF₂-, Q^{2'} is -CF₂CF₂O-CF₂CF₂CF₂-C(O)NH-CH₂- or -CF₂CF₂O-CF₂CF₂CF₂CH₂-O-CH₂-, X^{2'} each independently is an alkoxy group (e.g. a C₁₋₄ alkoxy group, preferably a methoxy group or an ethoxy group), a halogen atom (e.g. a chlorine atom) or an isocyanate group, and n8 is an integer of at least 1.)

The compound (2) may, for example, be synthesized as follows. As a raw material, a compound with a perfluoroalkylene group having CF₂=CF₂-O- and a carboxy group or a group convertible to a carboxy group, respectively, at both terminals, is prepared, and this compound is polymerized in the presence of an alcohol or a fluorinated alcohol to form a compound containing perfluorinated oxyalkylene units as repeating units. Then, this is fluorinated and then reacted with a lower alcohol, and as the case requires, an ethylenically unsaturated bond is formed at one terminal, whereupon a hydrolyzable group-containing silane compound having a reactive group is reacted to obtain the compound (2).

Otherwise, as the compound (2), it is possible to use a commercial product such as OPTOOL DSX, OPTOOLAES (manufactured by Daikin Industries, Ltd.), or Dow Corning 2634 Coating (manufactured by Dow Coming Toray Co., Ltd). Further, it is possible to use a fluorooxyalkylene group-containing polymer composition as disclosed in JP-A-2011-116947. In such a case, the composition is supplied as a mixture with a compound of the formula (2) wherein both Z¹ and Z² are R^{f3}.

Component (B) may be the compound (2), a partially hydrolyzed condensate of the compound (2), or a mixture thereof. The mixture may be a partially hydrolyzed condensate of the compound (2) containing an unreacted compound (2). The condensation degree (oligomerization degree) of the partially hydrolyzed condensate may be suitably adjusted.

The composition for forming a water repellent film of the present invention comprises the component (A) and the component (B); or a partially hydrolyzed co-condensate of the component (A) and the component (B); or a partially hydrolyzed co-condensate of the component (A), and the component (B); or a partially hydrolyzed co-condensate of the component (A) and a partially hydrolyzed co-condensate of the component (B); or a partially hydrolyzed condensate of a partially hydrolyzed co-condensate of the component (A) and a partially hydrolyzed co-condensate of the component (B). In a case where a partially hydrolyzed co-condensate of the component (A) and the component (B) is to be used, the component (A) or the component (B), or a mixture of the component (A) and the component (B), may further be added thereto.

As mentioned above, a partially hydrolyzed co-condensate of the component (A) and the component (B) is meant for an oligomer to be formed by hydrolysis of all or some of hydrolyzable groups of said components in a solvent in the presence of a catalyst such as an acid catalyst or an alkali catalyst and water, followed by dehydration condensation. The condensation degree (oligomerization degree) of the partially hydrolyzed co-condensate may suitably adjusted.

With a view to effectively imparting chemical resistance to the water repellent film, in the composition of the present invention, it is preferred to use the component (A) and the component (B), or a hydrolyzed co-condensate of the component (A) and the component (B), so that the mass ratio of the portion derived from the compound (1) to the portion derived from the compound (2) (i.e. the portion derived from the compound (1):the portion derived from the compound (2)) would be from 0.9:0.1 to 0.1:0.9, more preferably from 0.8:0.2 to 0.1:0.9, further preferably from 0.6:0.4 to 0.1:0.9, particularly preferably from 0.3:0.7 to 0.1:0.9.

From the viewpoint of the operation efficiency or easy control of the thickness of the water repellent film, the composition of the present invention may contain an organic solvent. As such an organic solvent, one capable of dissolving the essential components may be used, and for example, an alcohol, an ether, a ketone, an aromatic hydrocarbon, a paraffin type hydrocarbon or an ester (e.g. an acetic acid ester) may be mentioned. Among them, an organic solvent containing fluorine atoms (e.g. a fluoro-alcohol, a fluoro-hydrocarbon (such as perfluorohexane, perfluoromethylcyclohexane, perfluoro-1,3-dimethylcyclohexane or dichloropentafluoropropane), or a fluoro-ether (such as CF₃CH₂OCF₂CHF₂)) is preferred. One of such organic solvents may be used alone, or two or more of them may be used in combination. The composition of the present invention may contain an organic solvent used for producing the component (A), the component (B) or a partially hydrolyzed co-condensate thereof.

The proportion of the organic solvent is preferably at most 9,900 parts by mass, more preferably at most 2,900 parts by mass, for example from 400 to 2,900 parts by mass, per 100 parts by mass as the total mass of the component (A) and the component (B) or the hydrolyzed co-condensate of the component (A) and the component (B), from the viewpoint of the uniformity of the obtainable water repellent film.

The composition of the present invention may contain a functional additive within a range not to impair the effects of the present invention. Such a functional additive may, for example, be fine particles of a metal oxide such as silica, alumina, zirconia, titania, etc., a dye, a pigment, an antifouling material, a curing catalyst, or various resins. The amount of the functional additive to be added, is preferably at most 20 parts by mass, more preferably at most 10 parts by mass, for example from 1 to 10 parts by mass, per 100 parts by mass of the solid content of the composition (components excluding volatile content such as an organic solvent).

It is possible to form a water repellent film by using the composition of the present invention. As a method for forming the water repellent film, a known method for a fluorinated organosilane compound type surface treating agent may be used, and for example, a method may be mentioned wherein on the surface of a substrate, the composition is applied by brush coating, flow coating, spin-coating, dip coating, squeegee coating, spray coating or manual coating, and dried as the case requires in the atmospheric air or nitrogen atmosphere, followed by curing. The conditions for curing may suitably be selected, and for examples, conditions at a temperature of from 20 to 50°C under a relative humidity of from 50 to 95% may be mentioned. The thickness of the water repellent film is not particularly limited, but is preferably at most 50 nm, and it may, for example, be a thickness of from 2 to 20 nm.

### [Substrate with water repellent film]

### <Substrate>

The substrate in the substrate with a water repellent film of the present invention is not particularly limited so long as it is a substrate made of a material which is usually required to impart water repellency. As such a substrate, a metal, plastic, glass, ceramics or a combination thereof (such as a composite material or a laminated material) may be mentioned, and among them, glass is preferred.

The glass may, for example, be soda lime glass, borosilicate glass, alkali-free glass or quartz glass. Among them, soda lime glass is preferred. Here, when the substrate is soda lime glass, it is preferred to further provide a film to prevent elution of Na⁺ ions, from the viewpoint of durability. Further, when the substrate is glass produced by a float process, it is preferred to provide an undercoat layer and a water repellent film, on the surface with a less amount of tin, from the viewpoint of durability.

The shape of the substrate is not particularly limited and may be a plate shape or a shape having a curvature over its entire surface or a part thereof. The thickness of the substrate may suitably be selected depending upon the particular application and is preferably from 1 to 10 mm.

In the substrate with a water repellent film, the water repellent film is formed on at least a part on the substrate. The region on the substrate surface at which the water repellent film is to be formed is not particularly limited and may suitably be selected depending upon the particular application. In a case where the substrate is a plate shape, the water repellent film is usually formed over the entire surface on one side or both sides of the substrate.

### <Undercoat layer>

The substrate with a water repellent film of the present invention may be provided with an undercoat film containing silica between the substrate and the water repellent film. By providing such an undercoat film, the adhesion between the water repellent film and the substrate will increase, whereby further improvement in durability is expected.

The undercoat film may be formed by using a compound represented by the formula (3): Si(Y)₄ (wherein Y each independently is an alkoxy group, a halogen atom or an isocyanate group) or its partially hydrolyzed condensate.

In the formula (3), Y is preferably a C₁₋₄ alkoxy group, a chlorine atom or an isocyanate group, and the four Y are preferably the same.

The compound (3) may specifically be e.g. Si(NCO)₄, Si(OCH₃)₄ or Si(OC₂H₅)₄.

As the method for forming the undercoat film, a known method may be used, and a method may, for example, be mentioned wherein a composition comprising a hydrolyzable silane compound (e.g. the compound (3) or its partially hydrolyzed condensate) for forming the undercoat film and a solvent, is applied on the surface of a substrate, and dried as the case requires, followed by curing.

The thickness of the undercoat film is not particularly limited and is preferably at most 20 nm, and it may, for example, be from 1 to 10 nm.

### [Article for transport equipment]

The substrate with a water repellent film of the present invention may be used as an article for a transport equipment containing it. The transport equipment may, for example, be a train, an automobile, a ship or an aircraft. An article to be used for the transport equipment may, for example, be a body, window glass (e.g. front glass, side glass and rear glass), a mirror or a bumper. As the article for a transport equipment, window glass for a transport equipment is preferred, and window glass for an automobile is more preferred.

The water repellent film of the present invention is excellent in static water repellency and can maintain good water repellency even when it is exposed to an alkali reagent or salt water. Therefore, it can maintain water repellency even in use for a long period of time under various application conditions including outdoor use as an article for a transport equipment, and is suitable for such an application.

### EXAMPLES

Now, the present invention will be described in detail with reference to Examples and Comparative Examples, but it should be understood that the present invention is by no means restricted by the following description.

### [Composition for forming water repellent film]

The respective components to be incorporated to the composition for forming a water repellent film of the present invention are as follows.

### <Compound (1)>

Compound (i): CF₃(CF₂)₅CH₂CH₂SiCl₃ (manufactured by SynQuest Laboratories, Inc.)

### <Compound (2)>

Compound (ii-1) was prepared as follows.

### (Step 1-1)

Into a 300 mL three-necked round-bottomed flask, 14.1 g of sodium borohydride powder was put, and 350 g of AK-225 (trade name, manufactured by Asahi Glass Co., Ltd., HCFC 225) was added. While stirring and cooling in an ice bath, a solution having 100 g of compound (4), 15.8 g of methanol and 22 g of AK-225 mixed, was slowly dropwise added from a dropping funnel in a nitrogen atmosphere so that the internal temperature would not exceed 10°C. After the dropwise addition of the entire amount, a solution having 10 g of methanol and 10 g of AK-225 mixed, was further dropwise added. Then, the ice bath was removed, and stirring was continued while raising the temperature slowly to room temperature. After stirring at room temperature for 12 hours, the system was cooled again in an ice bath, and an aqueous hydrochloric acid solution was dropwise added until the liquid became acidic. After completion of the reaction, washing was carried out once with water and once with a saturated sodium chloride solution, whereupon an organic phase was recovered. The recovered organic phase was dried over magnesium sulfate, then the solid content was filtered off, followed by concentration by an evaporator. The recovered concentrated liquid was distilled under reduced pressure to obtain 80.6 g (yield: 88%) of compound (5).

CF₂=CFO-CF₂CF₂CF₂COOCH₃ (4)

CF₂=CFO-CF₂CF₂CF₂CH₂OH (5)

NMR spectra of compound (5):
¹H-NMR (300.4 MHz, solvent: deuterated chloroform, standard: TMS) δ (ppm): 2.2(1 H), 4.1 (2H)
¹⁹F-NMR (282.7 MHz, solvent: deuterated chloroform, standard: CFCl₃) δ (ppm): -85.6(2F), -114.0(1 F), -122.2(1 F), -123.3(2F), -127.4(2F), -135.2(1 F)

### (Step 1-2)

Into a 100 mL eggplant flask having a reflux condenser connected, 6.64 g of TFE was introduced and 7.32 g of potassium carbonate powder was added. While stirring at 75°C in a nitrogen atmosphere, 19.87 g of compound (5) obtained in step 1-1 was added, followed by stirring for 1 hour. Then, the temperature was raised to 120°C, and 113.34 g of compound (5) was slowly dropwise added while controlling so that the inner temperature would be at most 130°C. After the dropwise addition of the entire amount, stirring was further carried out for 1 hour while maintaining the temperature at 120°C, whereupon heating was stopped and stirring was continued until the temperature was lowered to room temperature. An aqueous hydrochloric acid solution was added to treat excess potassium carbonate, and water and AK-225 were added to carry out liquid separation treatment. After washing with water three times, an organic phase was recovered and concentrated by an evaporator to obtain a highly viscous oligomer. It was again diluted with 150 g of AK-225, and developed and fractionated by silica gel column chromatography (developing solvent: AK-225). With respect to each fraction, an average value of the number of units (n+1) was obtained from the integral value by ¹⁹F-NMR. 48.5 g of compound (6-i) having fractions with an average value of (n+1) in the following formula (6) being from 7 to 10 put together, and 13.2 g of compound (6-ii) having fractions with an average value of (n+1) in the following formula (6) being from 13 to 16 put together, were obtained.

CF₃CH₂-O-(CF₂CFHO-CF₂CF₂CF₂CH₂O)ₙ₊₁-H (6)

NMR spectra of compound (6-i):
¹H-NMR (300.4 MHz, solvent: deuterated acetone, standard: TMS) δ (ppm): 4.1(2H), 4.8(16H), 6.7 to 6.9(8H)
¹⁹F-NMR (282.7 MHz, solvent: deuterated acetone, standard: CFCl₃) δ (ppm):-74.2(3F),
-84.3 to -85.1(16F), -89.4 to -90.5(16F), -120.2(14F), -122.0(2F), -126.6(14F), -127.0(2F), -145.1(8F)

Average value of the number of units (n+1): 8

NMR spectra of compound (6-ii):
¹H-NMR (300.4 MHz, solvent: deuterated acetone, standard: TMS) δ (ppm): 4.1 (2H), 4.8(28H), 6.7 to 6.9(14H)
¹⁹F-NMR (282.7 MHz, solvent: deuterated acetone, standard: CFCl₃) δ (ppm):-74.2(3F),
-84.3 to -85.1(28F), -89.4 to -90.5(28F), -120.2(26F), -122.0(2F), -126.6(26F), -127.0(2F), -145.1(14F)

Average value of the number of units (n+1): 14

### (Step 1-3)

Into a 300 mL eggplant flask having a reflux condenser connected, 113.33 g of compound (6-i) obtained in step 1-2, 5.0 g of sodium fluoride powder and 150 g of AK-225 were introduced, and 84.75 g of CF₃CF₂CF₂OCF(CF₃)COF was added. After stirring at 50°C for 13 hours in a nitrogen atmosphere, stirring was carried out at 70°C for 3 hours. After removing sodium fluoride powder by a press filter, excess CF₃CF₂CF₂OCF(CF₃)COF and AK-225 were distilled off under reduced pressure. High polarity impurities were removed by silica gel chromatography (developing solvent: AK-225) to obtain 100.67 g (yield: 80%) of compound (7-i) having an average value of the number of units (n+1) in the following formula (7) being 8.

CF₃CH₂-O-(CF₂CFHO-CF₂CF₂CF₂CH₂O)ₙ₊₁-C(=O)CF(CF₃)OCF₂CF₂CF₃ (7)

NMR spectra of compound (7-i):
¹H-NMR (300.4 MHz, solvent: deuterated chloroform, standard: TMS) δ (ppm): 4.4(16H), 4.9(2H), 6.0-6.2(8H)
¹⁹F-NMR (282.7 MHz, solvent: deuterated chloroform, standard: CFCl₃) δ (ppm): -75.2(3F), -80.0(1 F), -81.9(3F), -82.7(3F), -84.7 to -85.0(16F), -86.0(1 F), -90.5 to -93.0(16F), -121.1(2F), -121.5(14F), -128.0(16F), -130.3(2F), -132.5(1F), -145.3(8F)

Average value of the number of units (n+1): 8

### (Step 1-4)

An autoclave (made of nickel, internal capacity: 1 L) was prepared. At a gas outlet of the autoclave, a condenser held at 0°C, a NaF pellet-packed layer and a condenser held at -10°C were set in series. Further, a liquid-returning line was set to return a liquid condensed in the condenser held at -10°C, to the autoclave.

Into the autoclave, 750 g of R-113 (CF₂ClCFCl₂) was put and stirred while maintaining the temperature at 25°C. After blowing nitrogen gas into the autoclave at 25°C for 1 hour, fluorine gas diluted to 20 vol% with nitrogen gas (hereinafter referred to as 20% fluorine gas) was blown into at 25°C at a flow rate of 3.2 Uhr for 1 hour. Then, while blowing 20% fluorine gas at the same flow rate, a solution having 130 g of the compound (7-i) obtained in step 1-3 dissolved in 448 g of R-113 was injected into the autoclave over a period of 22 hours.

Then, while blowing 20% fluorine gas at the same flow rate, the internal pressure of the autoclave was raised to 0.15 MPa (gauge pressure). Into the autoclave, 8 mL of a benzene solution containing 0.015 g/mL of benzene in R-113 was injected while heating from 25°C to 40°C, whereupon the injection inlet for the benzene solution of the autoclave was closed. After stirring for 20 minutes, 4 mL of the benzene solution was injected again while maintaining the temperature at 40°C, whereupon the inlet was closed. The same operation was further repeated 7 times. The total amount of benzene injected was 0.6 g.

Further, while blowing 20% fluorine gas at the same flow rate, stirring was continued for 1 hour. Then, the pressure in the autoclave was adjusted to the atmospheric pressure, nitrogen gas was blown into for 1 hour. The content of the autoclave was concentrated by an evaporator to obtain 152.1 g (yield: 99%) of compound (8-i) having an average value of the number of units (n) in the following formula (8) being 7.

CF₃CF₂-O-(CF₂CF₂O-CF₂CF₂CF₂CF₂O)ₙ-CF₂CF₂OCF₂CF₂CF₂CF₂O-C(=O)CF(CF₃)OCF₂CF₂CF₃ (8)

NMR spectra of compound (8-i):
¹⁹F-NMR (282.7 MHz, solvent: deuterated chloroform, standard: CFCl₃) δ (ppm): -80.0(1 F), -82.0 to -82.5(6F), -84.0(30F), -86.7 to 87.8(6F), -89.2(34F), -126.5(32F), -130.4(2F), -132.4(1 F)

Average value of the number of units (n): 7

### (Step 1-5)

Into a 500 mL round-bottomed eggplant flask made of a tetrafluoroethylene/perfluoro(alkoxy vinyl ether) copolymer (hereinafter referred to as PFA), 120 g of compound (8-i) obtained in step 1-4 and 240 g of AK-225 were put. While stirring and cooling in an ice bath, 6.1 g of methanol was slowly dropwise added from a dropping funnel in a nitrogen atmosphere. While bubbling with nitrogen, stirring was continued for 12 hours. The reaction mixture was concentrated by an evaporator to obtain 108.5 g (yield: 100%) of precursor (9-i) having an average value of the number of units (n) in the following formula (9) being 7.

CF₃CF₂-O-(CF₂CF₂O-CF₂CF₂CF₂CF₂O)ₙ-CF₂CF₂OCF₂CF₂CF₂C(=O)OCH₃ (9)

NMR spectra of precursor (9-i):
¹H-NMR (300.4 MHz, solvent: deuterated chloroform, standard: TMS) δ (ppm): 3.9(3H)
¹⁹F-NMR (282.7 MHz, solvent: deuterated chloroform, standard: CFCl₃) δ (ppm): -84.0(30F), -88.2(3F), -89.2(34F), -119.8(2F), -126.5(30F)

Average value of the number of units (n): 7

### (Step 1-6)

Into a 300 mL eggplant flask, 92.5 g of precursor (9-i) obtained in step 1-5 and 6.51 g of H₂NCH₂CH₂CH₂Si(OCH₃)₃ were put and stirred for 12 hours. From NMR, it was confirmed that 98% of precursor (9-i) was converted to compound (10-i). Further, all of H₂NCH₂CH₂CH₂Si(OCH₃)₃ was reacted, and methanol as a byproduct was formed. Thus, a composition containing 97% of compound (10-i) having an average value of the number of units (n) in the following formula (10) being 7, was obtained. This composition was used as compound (ii-1). The number average molecular weight of compound (10-i) was 2,900.

CF₃CF₂-O-(CF₂CF₂O-CF₂CF₂CF₂CF₂O)ₙ-CF₂CF₂OCF₂CF₂CF₂C(=O)NHCH₂CH₂CH₂-Si(OCH₃)₃ (10)

NMR spectra of compound (10-i):
¹H-NMR (300.4 MHz, solvent: deuterated chloroform, standard: TMS) δ (ppm): 0.6(2H), 1.6(2H), 2.8(1 H), 3.3(2H), 3.5(9H)
¹⁹F-NMR (282.7 MHz, solvent: deuterated chloroform, standard: CFCl₃) δ (ppm): -84.1(30F), -87.9(3F), -89.3(34F), -120.8(2F), -126.6(28F), -127.2(2F)

Average value of the number of units (n): 7

Compound (ii-2) was prepared as follows.

### (Step 2-1)

Into a 200 mL eggplant flask having a reflux condenser connected, 114.72 g of compound (6-ii) obtained in step 1-2, 8.1 g of sodium fluoride powder and 101.72 g of AK-225 were introduced, and 95.18 g of CF₃CF₂CF₂OCF(CF₃)COF was added. After stirring at 50°C for 12 hours in a nitrogen atmosphere, stirring was conducted at room temperature overnight. After removing sodium fluoride powder by a press filter, excess CF₃CF₂CF₂OCF(CF₃)COF and AK-225 were distilled off under reduced pressure. High polarity impurities were removed by silica gel chromatography (developing solvent: AK-225) to obtain 94.57 g (yield: 77%) of compound (7-ii) having an average value of the number of units (n+1) in the above formula 7 being 14.

NMR spectra of compound (7-ii):
¹H-NMR (300.4 MHz, solvent: deuterated chloroform, standard: TMS) δ (ppm): 4.4(28H), 4.9(2H), 6.0-6.2(14H)
¹⁹F-NMR (282.7 MHz, solvent: deuterated chloroform, standard: CFCl₃) δ (ppm): -75.2(3F), -80.0(1 F), -81.9(3F), -82.7(3F), -84.7 to -85.0(28F), -86.0(1 F), -90.5 to -93.0(28F), -121.1(2F), -121.5(26F), -128.0(28F), -130.3(2F), -132.5(1F), -145.3(14F)

Average value of the number of units (n+1): 14

### (Step 2-2)

An autoclave (made of nickel, internal capacity: 3L) was prepared. At a gas outlet of the autoclave, a condenser held at 0°C, a NaF pellet-packed layer and a condenser held at -10°C were set in series. Further, a liquid-returning line was set to return a liquid condensed in the condenser held at -10°C, to the autoclave.

Into the autoclave, 2,350 g of R-113 was put and stirred while maintaining the temperature at 25°C. After blowing nitrogen gas into the autoclave at 25°C for 1 hour, 20% fluorine gas was blown into at 25°C at a flow rate of 4.2 Uhr for 1 hour. Then, while blowing 20% fluorine gas at the same flow rate, a solution having 213 g of the compound (7-ii) obtained in step 2-1 dissolved in 732 g of R-113 was injected into the autoclave over a period of 29 hours.

Then, while blowing 20% fluorine gas at the same flow rate, the internal pressure of the autoclave was raised to 0.15 MPa (gauge pressure). Into the autoclave, 4 mL of a benzene solution containing 0.009 g/mL of benzene in R-113 was injected while heating from 25°C to 40°C, whereupon the injection inlet for the benzene solution of the autoclave was closed. After stirring for 20 minutes, 5 mL of the benzene solution was injected again while maintaining the temperature at 40°C, whereupon the inlet was closed. The same operation was further repeated 7 times. The total amount of benzene injected was 0.4 g.

Further, while blowing 20% fluorine gas at the same flow rate, stirring was continued for 1 hour. Then, the pressure in the autoclave was adjusted to the atmospheric pressure, and nitrogen gas was blown into for 1 hour. The content of the autoclave was concentrated by an evaporator to obtain 250.1 g (yield: 99%) of compound (8-ii) having an average value of the number of units (n) in the above formula (8) being 13.

NMR spectra of compound (8-ii):
¹⁹F-NMR (282.7 MHz, solvent: deuterated chloroform, standard: CFCl₃) δ (ppm): -80.3(1 F), -82.0 to -82.5(6F), -84.2(54F), -86.9 to 88.0(6F), -89.4(58F), -126.6(56F), -130.4(2F), -132.4(1F)

Average value of the number of units (n): 13

### (Step 2-3)

Into a 500 mL round-bottomed eggplant flask made of PFA, 110 g of compound (8-ii) obtained in step 2-2 and 220 g of AK-225 were put. While stirring and cooling in an ice bath, 3.5 g of methanol was slowly dropwise added from a dropping funnel in a nitrogen atmosphere. While bubbling with nitrogen, stirring was continued for 12 hours. The reaction mixture was concentrated by an evaporator to obtain 103 g (yield: 100%) of precursor (9-ii) having an average value of the number of units (n) in the above formula (9) being 13.

NMR spectra of precursor (4a-1 ii):
¹H-NMR (300.4 MHz, solvent: deuterated chloroform, standard: TMS) δ (ppm): 3.9(3H)
¹⁹F-NMR (282.7 MHz, solvent: deuterated chloroform, standard: CFCl₃) δ (ppm): -84.0(54F), -88.2(3F), -89.2(58F), -119.8(2F), -126.5(54F)

Average value of the number of units (n): 13

### (Step 2-4)

Into a 300 mL eggplant flask, 100.5 g of precursor (9-ii) obtained in step 2-3 and 4.38 g of H₂NCH₂CH₂CH₂Si(OCH₃)₃ were put and stirred for 12 hours. From NMR, it was confirmed that 98% of precursor (9-ii) was converted to compound (10-ii). Further, all of H₂NCH₂CH₂CH₂Si(OCH₃)₃ was reacted, and methanol as a byproduct was formed. Thus, a composition containing 97% of compound (10-ii) having an average value of the number of units (n) in the above formula (10) being 13, was obtained. This composition was used as compound (ii-2). The number average molecular weight of compound (10-ii) was 4,900.

NMR spectra of compound (10-ii):
¹H-NMR (300.4 MHz, solvent: deuterated chloroform, standard: TMS) δ (ppm): 0.6(2H), 1.6(2H), 2.8(1H), 3.3(2H), 3.5(9H)
¹⁹F-NMR (282.7 MHz, solvent: deuterated chloroform, standard: CFCl₃) δ (ppm): -84.1 (54F), -87.9(3F), -89.3(58F), -120.8(2F), -126.6(52F), -127.2(2F)

Average value of the number of units (n): 13

Compound (ii-3) was prepared as follows.

### (Step 3-1)

In a 500 mL three-necked eggplant flask, 0.92 g of lithium chloride was dissolved in 91.6 g of ethanol. 120.0 g of precursor (9-i) obtained in step 1-5 was added thereto, and while cooling in an ice bath, a solution having 3.75 g of sodium borohydride dissolved in 112.4 g of ethanol was slowly dropwise added. Then, the ice bath was removed, and stirring was continued while raising the temperature slowly to room temperature. After stirring at room temperature for 12 hours, an aqueous hydrochloric acid solution was dropwise added until the liquid became acidic. 100 mL of AK-225 was added, and washing was carried out once with water and once with a saturated sodium chloride solution, whereupon an organic phase was recovered. The recovered organic phase was concentrated by an evaporator to obtain 119.0 g (yield: 100%) of compound (11-i) having an average value of the number of units (n) in the following formula (11) being 7.

CF₃CF₂-O-(CF₂CF₂O-CF₂CF₂CF₂CF₂O)ₙ-CF₂CF₂OCF₂CF₂CF₂CH₂OH (11)

NMR spectra of compound (11-i):
¹H-NMR (300.4 MHz, solvent: deuterated chloroform, standard: TMS) δ (ppm): 1.8(1 H), 4.0(2H)
¹⁹F-NMR (282.7 MHz, solvent: deuterated chloroform, standard: CFCl₃) δ (ppm): -84.1(30F), -87.7(3F), -89.3(34F), -123.7(2F), -126.6(28F), -127.8(2F)

Average value of the number of units (n): 7

### (Step 3-2)

In a 500 mL three-necked eggplant flask, 2.26 g of sodium hydride was suspended in 22.6 g of tetrahydrofuran (hereinafter referred to as THF). A solution having 118.5 g of compound (11-i) obtained in step 3-1 diluted with 212.4 g of AC-2000 (trade name, manufactured by Asahi Glass Co., Ltd.) was dropwise added thereto, and further 15.7 g of allyl bromide was dropwise added. The temperature was adjusted to 70°C in an oil bath, and stirring was conducted for 5 hours. The obtained reaction crude liquid was washed once with water and once with a saturated sodium chloride solution, and an organic phase was recovered. The recovered organic phase was passed through a silica gel column, and the recovered solution was concentrated by an evaporator and washed three times with hexane to obtain 99.9 g (yield: 83%) of precursor (12-i) having an average value of the number of units (n) in the following formula (12) being 7.

CF₃CF₂-O-(CF₂CF₂O-CF₂CF₂CF₂CF₂O)ₙ-CF₂CF₂OCF₂CF₂CF₂CH₂O-CH₂CH=CH₂ (12)

NMR spectra of compound (12-i):
¹H-NMR (300.4 MHz, solvent: deuterated chloroform, standard: TMS) δ (ppm): 3.8(2H), 4.1(2H), 5.2(2H), 5.9(2H)
¹⁹F-NMR (282.7 MHz, solvent: deuterated chloroform, standard: CFCl₃) δ (ppm): -84.1(30F), -87.7(3F), -89.3(34F), -120.5(2F), -126.6(28F), -127.6(2F)

Average value of the number of units (n): 7

### (Step 3-3)

Into a 100 mL closed pressure-resistant container made of polytetrafluoroethylene (hereinafter referred to as PTFE), 49.0 g of precursor (12-i) obtained in step 3-2, 0.26 g of di-tert-butylperoxide, 23.7 g of trichlorosilane and 24.5 g of HFE-7300 (trade name, manufactured by 3M) were put and stirred at 120°C for 8 hours. After reduced pressure concentration to distill off unreacted materials, solvent, etc., the concentrated solution was put into a flask equipped with a dropping funnel, and 50 g of HFE-7300 was put, followed by stirring at room temperature. 15.0 g of a mixed solution of trimethyl orthoformate and methanol (trimethyl orthoformate:methanol=25:1 [mol:mol]) was dropwise added and reacted at 60°C for 3 hours. After completion of the reaction, the solvent, etc. were distilled off, and to the residue, 0.05 g of activated carbon was added and stirred for one hour, followed by filtration with a membrane filter having a pore diameter of 0.5 µm, to obtain 49.5 g (yield: 97%) of a mixture of compound (13-i) having an average value of the number of units (n) in the following formula (13) being 7 and compound (14-i) having an average value of the number of units (n) in the following formula (14) being 7. The molar ratio of compound (13-i) to compound (14-i) was 93:7 from NMR. The number average molecular weight of the mixture was 2,900. This mixture was used as compound (ii-3).

CF₃CF₂-O-(CF₂CF₂O-CF₂CF₂CF₂CF₂O)ₙ-CF₂CF₂OCF₂CF₂CF₂CH₂OCH₂CH₂CH₂-Si(OCH₃)₃ (13)

CF₃CF₂-O-(CF₂CF₂O-CF₂CF₂CF₂CF₂O)ₙ-CF₂CF₂OCF₂CF₂CF₂CH₂OCH₂CH(CH₃)- Si(OCH₃)₃ (14)

NMR spectra of compound (13-i):
¹H-NMR (300.4 MHz, solvent: deuterated chloroform, standard: TMS) δ (ppm): 0.7(2H), 1.7(2H), 3.6(11 H), 3.8(2H)
¹⁹F-NMR (282.7 MHz, solvent: deuterated chloroform, standard: CFCl₃) δ (ppm): -84.1(30F), -87.7(3F), -89.3(34F), -120.8(2F), -126.6(28F), -127.6(2F)

NMR spectra of compound (14-i):
¹H-NMR (300.4 MHz, solvent: deuterated chloroform, standard: TMS) δ (ppm): 1.1 (3H), 1.8(1H), 3.6(11 H), 3.8(2H).
¹⁹F-NMR (282.7 MHz, solvent: deuterated chloroform, standard: CFCl₃) δ (ppm): -84.1(30F), -87.7(3F), -89.3(34F), -120.8(2F), -126.6(28F), -127.6(2F)

Average value of the number of units (n): 7

Compound (ii-4) was synthesized in accordance with Example 1 in JP-A-2011-116947. Compound (ii-4) is a mixture comprising 50 mol% of (15a), 25 mol% of (15b) and 25 mol% of (15c) having the following structures. The number average molecular weight is 4,400.

F₃ C(OC₂ F₄)ₚ(OCF₂)_{q}-OCF₂ CH₂OC₃H₆Si(OCH₃)₃ (15a)

(CH₃O)₃ SiC₃H₆OCH₂-CF₂-(OC₂F₄)ₚ(OCF₂)_{q}-OCF₂CH₂OC₃H₆Si(OCH₃)₃ (15b)

F₃C(OC₂F₄)ₚ(OCF₂)_{q}-OCF₃ (15c)

(p/q = 0.9, p + q ≒ 45)

Compound (ii-5) is Optool DSX (manufactured by Daikin Industries, Ltd.) and has the following structure. The number average molecular weight is about 4,000.

The above described compounds (ii-1) to (ii-5) are compounds relating to Examples for compound (2) of the present invention.

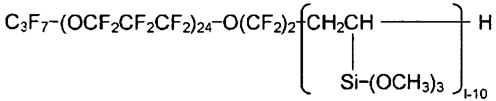

Compound (ii-6): CF₃O(CF₂CF₂O)ₐCF₂CONHC₃H₆Si(OCH₃)₃ (a is from 7 to 8, average value: 7.3; number average molecular weight: 1,200)

The above compound (ii-6) is a compound relating to a Comparative Example against the compound (2) of the present invention.

### [Preparation of composition for forming water repellent film]

Using a mixed solvent of butyl acetate (manufactured by Junsei Chemical Co., Ltd.) and hydrofluoroether (AE3000, manufactured by Asahi Glass Co., Ltd., CF₃CH₂OCF₂CHF₂) (butyl acetate:AE3000 = 2:8 by mass ratio), a mixture comprising a compound corresponding to component (A) and a compound corresponding to component (B) in a mass ratio as shown in Table 1, was diluted to 7 mass%, based on 100 mass% of the mixed solvent, followed by stirring for 60 minutes to obtain a composition for forming a water repellent film.

### [Preparation of composition for forming undercoat film]

With butyl acetate (manufactured by Junsei Chemical Co., Ltd.), tetra-isocyanate silane (manufactured by Matsumoto Fine Chemical Co., Ltd.) was diluted to 5 mass% to obtain a composition for forming an undercoat film.

### [Forming of water repellent film]

Using as a substrate a clean soda lime glass substrate having the surface polished with cerium oxide, cleaned and dried (water contact angle: 5 degree, 300 mm × 300 mm × thickness 3 mm), on the surface of the glass substrate, 0.5 g of the composition for forming an undercoat layer obtained as described above, was applied by a squeegee coating method and dried at 25°C for 1 minute to form an undercoat layer (uncured). Then, on the surface of the formed undercoat layer (uncured), 0.5 g of any one of the compositions for forming a water repellent layer obtained as described above, was applied by a squeegee coating method and held in a constant temperature and humidity chamber set at 50°C under relative humidity of 60% for 48 hours to form a water repellent layer and at the same time to carry out curing of the undercoat layer, followed by wiping the surface of the water repellent layer with paper waste impregnated with 2-propanol, to obtain a substrate with a water repellent film, having the undercoat layer and the water repellent film made of the water repellent layer in this order from the substrate side.

### [Evaluations]

Evaluations of the substrate with a water repellent film obtained as exemplified above were conducted as follows.

### <Water repellency>

Water repellency was evaluated by a water contact angle (CA) as measured by the following method. Firstly, before conducting each of the following tests, an initial value was measured. Here, when the initial water contact angle (CA) is at least 100°, such is regarded as having practically sufficient water repellency.

### (Water contact angle (CA))

The contact angle of a water droplet having a diameter of 1 mm placed on the surface of a water repellent film of a substrate with a water repellent film, was measured by means of DM-701 (manufactured by Kyowa Interface Science Co., Ltd.). Measurements were carried out at five different positions on the surface of the water repellent film, and the average value was calculated.

### <Chemical resistance>

### (Alkali-resistance test)

A substrate with a water repellent film was immersed in a 1 N NaOH aqueous solution (pH: 14) for 2 hours, then washed with water and dried in air, whereupon the water contact angle was measured by the above method. When the water contact angle (CA) after the above test is at least 70°, such is regarded as having practically sufficient alkali resistance.

### (Salt water spray test (SST))

In accordance with JIS H8502, a salt water spray test was conducted. That is, the surface of a water repellent film of a substrate with a water repellent film was exposed to a salt water atmosphere for 300 hours in a salt water spray tester (manufactured by Suga Test Instruments Co., Ltd.), whereupon the water contact angle was measured by the above method. When the water contact angle (CA) after the above test is at least 70°, such is regarded as having practically sufficient salt water resistance.

### <Light resistance>

### (Light resistance test)

The surface of a water repellent film of a substrate with a water repellent film, was irradiated with light rays (650 W/m², 300 to 700 nm) at a black panel temperature of 63°C for 1,500 hours by means of SUNTEST XLS+ manufactured by Toyo Seiki Co., Ltd., whereupon the water contact angle was measured by the above method. When the water contact angle (CA) after the above test is at least 100°, such is regarded as having practically sufficient light resistance.

**[Table 1]**

| | Component (A) | Component (B) | Mass ratio of component (A):component (B) | Initial | Alkali resistance (pH 14) | Salt water spray | Light resistance |
|---|---|---|---|---|---|---|---|
| Comp. Ex.1 | Compound (i) | Compound (ii-6) | 0.8:0.2 | 109 | 38 | 54 | 99 |
| Comp. Ex.2 | Compound (i) | Compound (ii-6) | 0.7:0.3 | 110 | 47 | 60 | 97 |
| Comp. Ex.3 | Compound (i) | Compound (ii-6) | 0.6:0.4 | 110 | 67 | 68 | 94 |
| Example 1 | Compound (i) | Compound (ii-1) | 0.8:0.2 | 112 | 72 | 79 | 105 |
| Example 2 | Compound (i) | Compound (ii-1) | 0.7:0.3 | 113 | 98 | 85 | 107 |
| Example 3 | Compound (i) | Compound (ii-1) | 0.6:0.4 | 112 | 97 | 91 | 107 |
| Comp. Ex.4 | Compound (i) | Nil | 1.0:0 | 106 | 35 | 40 | 99 |
| Example 4 | Compound (i) | Compound (ii-2) | 0.9:0.1 | 109 | 75 | 70 | 102 |
| Example 5 | Compound (i) | Compound (ii-2) | 0.8:0.2 | 111 | 79 | 75 | 105 |
| Example 6 | Compound (i) | Compound (ii-2) | 0.7:0.3 | 111 | 91 | 92 | 107 |
| Example 7 | Compound (i) | Compound (ii-2) | 0.6:0.4 | 112 | 97 | 90 | 106 |
| Example 8 | Compound (i) | Compound (ii-2) | 0.5:0.5 | 111 | 97 | 94 | 107 |
| Example 9 | Compound (i) | Compound (ii-2) | 0.4:0.6 | 111 | 99 | 104 | 108 |
| Example 10 | Compound (i) | Compound (ii-2) | 0.3:0.7 | 111 | 102 | 107 | 108 |
| Example 11 | Compound (i) | Compound (ii-2) | 0.2:0.8 | 112 | 105 | 112 | 109 |
| Example 12 | Compound (i) | Compound (ii-2) | 0.1:0.9 | 112 | 110 | 112 | 109 |

| | Component (A) | Component (B) | Mass ratio of component (A):component (B) | Initial | Alkali resistance (pH14) | Salt water spray | Light resistance |
|---|---|---|---|---|---|---|---|
| Comp. Ex.5 | Nil | Compound (ii-2) | 0:1.0 | 112 | 110 | 112 | 91 |
| Example 13 | Compound (i) | Compound (ii-3) | 0.8:0.2 | 109 | 85 | 75 | 102 |
| Example 14 | Compound (i) | Compound (ii-3) | 0.6:0.4 | 112 | 100 | 97 | 103 |
| Example 15 | Compound (i) | Compound (ii-4) | 0.6:0.4 | 110 | 84 | 90 | 104 |
| Example 16 | Compound (i) | Compound (ii-5) | 0.8:0.2 | 111 | 89 | 87 | 102 |
| Example 17 | Compound (i) | Compound (ii-5) | 0.6:0.4 | 113 | 111 | 102 | 105 |

As shown in Table 1, it is evident that the substrate with a water repellent film in each Example is excellent in initial water repellency and maintains good water repellency even after the alkali resistance test, the salt water spray test and the light resistance test. Especially, it is evident that as the amount of component (B) increases, maintenance of water repellency after the alkali resistance test, the salt water spray test and the light resistance test, tends to be better. Further, it is evident that the substrate with a water repellent film in Example using the compound (ii-1) or (ii-2) is excellent in maintenance of water repellency after the light resistance test.

On the other hand, in Comparative Examples 1 to 3, a composition was used wherein the number average molecular weight of a component corresponding to component (B) of the present invention was small, whereby it was not possible to maintain the water repellency after the alkali resistance test, and in Comparative Examples 1 and 2, the decrease in the water contact angle after the salt water spray test was also large. Further, in Comparative Example 4, a composition containing only component (A) of the present invention was used, the decrease in the water contact angle after the alkali resistance test and the light resistance test was large, and in Comparative Example 5, a composition containing only component (B) of the present invention was used, the decrease in the water contact angle after the light resistance test was large.

### INDUSTRIAL APPLICABILITY

According to the present invention, it is possible to provide a composition for forming a water repellent film, which is capable of forming a water repellent film excellent in chemical resistance (alkali reagent resistance and salt water spray resistance) and light resistance.

The entire disclosure of Japanese Patent Application No. 2013-028135 filed on February 15, 2013 including specification, claims, drawings and summary is incorporated herein by reference in its entirety.

## Claims

1. A composition for forming a water repellent film, which comprises
(A) a compound represented by the formula (1): R^{f1}-Q¹-SiR¹ₚX¹₃₋ₚ (wherein R^{f1} is a group: C_{I}F_{2I+1} (wherein I is an integer of from 1 to 6), Q¹ is a C₁₋₆ bivalent hydrocarbon group, R¹ each independently is a C₁₋₆ monovalent hydrocarbon group, X¹ each independently is a hydroxy group or a hydrolyzable group, and p is an integer of from 0 to 2), and/or the compound's partially hydrolyzed condensate, and
(B) a compound represented by the formula (2): Z¹-R^{f2}-Z² (wherein R^{f2} is -O-(CaF₂ₐO)ₙ- (wherein a is an integer of from 1 to 6, n is an integer of at least 1, and each -CaF₂ₐO- unit may be the same or different), and each of Z¹ and Z² which are independent of each other, is R^{f3} or a group: -Q²-{CH₂CH(SiR²_{q}X²_{3-q})}ᵣ-H, provided that either one is the group: -Q²-{CH₂CH(SiR²_{q}X²_{3-q})}ᵣ-H (wherein R^{f3} is a group: CₘF₂ₘ₊₁ (wherein m is an integer of from 1 to 6), Q² is -(CH₂)ₛ- (wherein s is an integer of from 0 to 12) or -(CH₂)ₛ- containing at least one member selected from the group consisting of an ester bond, an ether bond, an amido bond, a urethane bond and a phenylene group, provided that any or all of -CH₂- units may be substituted by a -CF₂- unit and/or a -CFCF₃- unit, R² each independently is a hydrogen atom or a C₁₋₆ monovalent hydrocarbon group which may contain a substituent, X² each independently is a hydroxy group or a hydrolyzable group, q is an integer of from 0 to 2, and r is an integer of from 1 to 20), and having a number average molecular weight of at least 2,600, and/or the compound's partially hydrolyzed condensate; or a partially hydrolyzed co-condensate of the component (A) and the component (B).

2. The composition for forming a water repellent film according to Claim 1, wherein the compound represented by the formula (2) has a number average molecular weight of from 2,800 to 10,000.

3. The composition for forming a water repellent film according to Claim 1 or 2, wherein in the formula (2), Z¹ is R^{f3}, and Z² is a group: -Q²-{CH₂CH(SiR²_{q}X²_{3-q})}ᵣ-H (wherein R^{f3}, Q², R², X², q and r are as defined in Claim 1).

4. The composition for forming a water repellent film according to any one of Claims 1 to 3, wherein R^{f2} in the formula (2) is a group represented by the formula -O-(CF₂CF₂CF₂CF₂CF₂CF₂O)ₙ₁-(CF₂CF₂CF₂CF₂CF₂O)ₙ₂-(CF₂CF₂CF₂CF₂O)ₙ₃-(CF₂CF₂CF₂O)ₙ₄-(CF(CF₃)CF₂O)ₙ₅-(CF₂CF₂O)ₙ₆-(CF₂O)ₙ₇- (wherein each of n1, n2, n3, n4, n5, n6 and n7 which are independent of one another, is an integer of at least 0, provided that the total of n1, n2, n3, n4, n5, n6 and n7 is at least 1, and each repeating unit may be present in a block or random form).

5. The composition for forming a water repellent film according to Claim 4, wherein R^{f2} in the formula (2) is a group represented by the formula -O-(CF₂CF₂O-CF₂CF₂CF₂CF₂O)ₙ₈ (wherein n8 is an integer of at least 1).

6. The composition for forming a water repellent film according to Claim 5, wherein the compound represented by the formula (2) is a compound represented by the formula (2'): R^{f3'}-O-(CF₂CF₂O-CF₂CF₂CF₂CF₂O)ₙ₈-Q^{2'}-CH₂CH₂SiX^{2'}₃ (wherein R^{f3'} is CF₃ or CF₃CF₂-, Q^{2'} is -CF₂CF₂O-CF₂CF₂CF₂-C(O)NH-CH₂- or -CF₂CF₂O-CF₂CF₂CF₂CH₂-O-CH₂-, X^{2'} each independently is an alkoxy group, a halogen atom or an isocyanate group, and n8 is an integer of at least 1).

7. The composition for forming a water repellent film according to any one of Claims 1 to 6, wherein in the composition, the mass ratio of the portion derived from the compound represented by the formula (1) to the portion derived from the compound represented by the formula (2) is from 0.9:0.1 to 0.1:0.9.

8. A water repellent film formed by using the composition for forming a water repellent film as defined in any one of Claims 1 to 7.

9. A substrate with a water repellent film, which comprises a substrate and the water repellent film as defined in Claim 8, formed on at least a part of the substrate.

10. The substrate with a water repellent film according to Claim 9, which further has an undercoat film containing silica, between the substrate and the water repellent film.

11. The substrate with a water repellent film according to Claim 10, wherein the undercoat film is one formed by using a composition for forming an undercoat film, which contains a compound represented by the formula (3): SiY₄ (wherein Y each independently is an alkoxy group, a halogen atom or an isocyanate group), or its partially hydrolyzed condensate.

12. The substrate with a water repellent film according to any one of Claims 9 to 11, wherein the substrate contains glass.

13. An article for a transport equipment, which comprises the substrate with a water repellent film as defined in any one of Claims 9 to 12.
